# EUROPEAN PATENT APPLICATION

(11) **EP 4 834 855 A1**
(43) Date of publication of application: **04.11.2026**
(21) Application number: 24911795.3
(22) Date of filing: 18.01.2024
(51) Int. Cl.: C03B 5/24

(54) **INFORMATION PROCESSING DEVICE, GLASS PRODUCTION SYSTEM, INFORMATION PROCESSING METHOD, PROGRAM, AND CALIBRATION PARAMETER ESTIMATION METHOD**

(30) Priority: 27.12.2023 JP 2023221659
(71) Applicant: AGC Inc., Chiyoda-ku Tokyo 100-8405 (JP)
(72) Inventor: SEKI Taiga, Tokyo 100-8405 (JP); WATANABE Yasuhiro, Tokyo 100-8405 (JP); NAMBA Mari, Tokyo 100-8405 (JP)
(74) Representative: Müller-Boré & Partner Patentanwälte PartG mbB
(86) International application number: PCT/JP2024/001280
(87) International publication number: WO 2025/141896

(57) **Abstract**

An information processing device includes a state estimating unit configured to estimate an actual state using measurement data stored in a measurement data storage unit storing measurement data of a plurality of sensors installed inside or outside of a glass melting furnace to measure a value associated with molten glass and a glass melting furnace simulation model modeling the glass melting furnace.

## Description

### TECHNICAL FIELD

The present disclosure relates to an information processing device, a glass production system, an information processing method, a program, and a calibration parameter estimation method.

### BACKGROUND ART

A glass melting furnace is used in glass article production equipment.

The glass melting furnace includes, for example, a dissolution bath including a bottom and a side wall and a top structure covering the top of the dissolution bath.

Convection generated in molten glass which is obtained by melting a raw glass material affects quality, for example, bubble density, foreign matter density, and homogeneity, of a glass article which is a final product.

Therefore, the technique described in Patent Document 1 proposes that an average flow rate of an upstream surface current and a downstream surface current is adjusted when the upstream surface current is defined as a flow in the vicinity of the surface of molten glass in an upstream circulating flow formed upstream from a bubbler and the downstream surface current is defined as a flow in the vicinity of the surface of the molten glass in a downstream circulating flow formed downstream from the bubbler (see Patent Document 1).

### Citation List

### Patent Document

Patent Document 1: PCT International Publication No. WO2015/033931

### SUMMARY OF INVENTION

### Technical Problem

Here, a glass melting process requires improvement in quality of glass to be produced, improvement in production efficiency, a decrease in cost, a decrease in environmental load, and the like.

However, since the glass melting process is a high-temperature process, it may be difficult to ascertain details in the glass melting furnace and to stably realize the requirements.

Numerical simulation can be used for ascertainment of a state in the glass melting furnace or examination of operation, but the use is restrictive in the related art for the following reasons. That is, there are reasons that a model calibration operation (a workflow for performing simulation) for obtaining a simulation result with sufficient precision takes time, and the number of persons (for example, full-time workers for analysis) is limited because specialized knowledge and skills are required for performing simulation. For these reasons, it may be difficult to perform simulation in a timely manner, and thus the need for solving problems in a production site in a short time cannot be satisfactorily satisfied.

The present disclosure was invented in consideration of the aforementioned circumstances, and an objective thereof is to provide an information processing device, a glass production system, an information processing method, a program, and a calibration parameter estimation method that can achieve an increase in support efficiency using simulation through realization of automatic simulation in glass production in comparison with the related art.

### Solution to Problem

An aspect of the present disclosure provides an information processing device including a state estimating unit configured to estimate an actual state using measurement data stored in a measurement data storage unit storing measurement data of a plurality of sensors installed inside or outside of a glass melting furnace to measure a value associated with molten glass and a glass melting furnace simulation model modeling the glass melting furnace.

Another aspect of the present disclosure provides a glass production system including a glass production device including a glass melting furnace and an information processing device, the glass production system including a measurement data storage unit configured to store measurement data of a plurality of sensors installed inside or outside of the glass melting furnace to measure a value associated with molten glass and provided inside or outside of the information processing device, wherein the information processing device includes a state estimating unit configured to estimate the actual state using a glass melting furnace simulation model modeling the glass melting furnace and the measurement data stored in the measurement data storage unit.

Another aspect of the present disclosure provides an information processing method that is performed by an information processing device, the information processing method including estimating an actual state using measurement data stored in a measurement data storage unit storing measurement data of a plurality of sensors installed inside or outside of a glass melting furnace to measure a value associated with molten glass and a glass melting furnace simulation model modeling the glass melting furnace.

Another aspect of the present disclosure provides a program for causing a computer to realize a state estimating function of estimating an actual state using measurement data stored in a measurement data storage unit storing measurement data of a plurality of sensors installed inside or outside of a glass melting furnace to measure a value associated with molten glass and a glass melting furnace simulation model modeling the glass melting furnace.

Another aspect of the present disclosure provides a calibration parameter estimation method including: executing a plurality of simulations on a glass melting furnace simulation model on the basis of an experimental design method in a range comprehensively including conditions assumed in an actual glass production process with an operation condition of a glass melting furnace and a calibration parameter as configuration variables; generating a prediction model by performing machine learning using a simulation result of the simulation; and evaluating the change sensitivity by which the operation condition of the glass melting furnace and the calibration parameter affect the simulation result of at least one of a molten glass temperature, the resistivity of molten glass, the current value, the voltage value, or the resistance value between heating electrodes, the molten glass flow rate, the furnace material temperature, and the furnace-inside/outside atmosphere temperature at a plurality of observation points of the glass melting furnace.

### Advantageous Effects of Invention

With the information processing device, the glass production system, the information processing method, the program, and the calibration parameter estimation method according to the present disclosure, it is possible to achieve an increase in support efficiency using simulation through realization of automatic simulation in glass production in comparison with the related art.

### BRIEF DESCRIPTION OF DRAWINGS

[FIG. 1] A diagram schematically illustrating an example configuration of a glass production system according to an embodiment.
[FIG. 2A] A diagram schematically illustrating online simulation according to the embodiment.
[FIG. 2B] A diagram schematically illustrating digital prototyping according to the embodiment.
[FIG. 3A] A diagram illustrating an example of a cross-section of a glass melting kiln according to the embodiment.
[FIG. 3B] A diagram illustrating an example of another cross-section of the glass melting kiln according to the embodiment.
[FIG. 4] A diagram illustrating an example of a process flow that is performed by an information processing device according to the embodiment.
[FIG. 5] A diagram illustrating an example of a flow of a calibration parameter estimating process that is performed by the information processing device according to the embodiment.
[FIG. 6] A diagram illustrating another example of the flow of the calibration parameter estimating process that is performed by the information processing device according to the embodiment.
[FIG. 7] A diagram illustrating a table showing an example of calibration parameters according to the embodiment.
[FIG. 8] A diagram schematically illustrating a first process in a specific example of the calibration parameter estimating process according to the embodiment.
[FIG. 9A] A diagram schematically illustrating a result of the first process in a specific example of the calibration parameter estimating process according to the embodiment.
[FIG. 9B] A diagram schematically illustrating a second process in a specific example of the calibration parameter estimating process according to the embodiment.
[FIG. 10] A diagram illustrating a table showing an example of estimation results of calibration parameters according to the embodiment.
[FIG. 11] A diagram illustrating an example of comparison between characteristics of simulation results using the estimation results of calibration parameters according to the embodiment and characteristics of actual machine data.
[FIG. 12] A diagram schematically illustrating an example of comparison between characteristics based on simulation results when the calibration parameter estimating process is not performed and characteristics of actual machine data.
[FIG. 13] A diagram schematically illustrating an example of a change in furnace wall heat radiation due to the aging of the glass melting furnace.

### DESCRIPTION OF EMBODIMENTS

Hereinafter, embodiments of the present disclosure will be described with reference to the accompanying drawings.

### (First embodiment)

A first embodiment will be described below.

### [Information processing device]

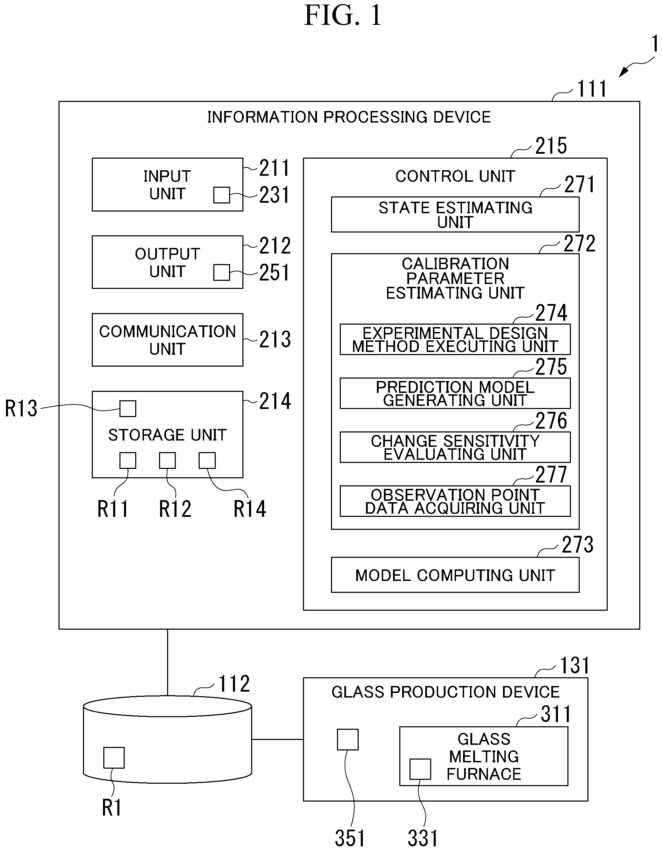

FIG. 1 is a diagram schematically illustrating an example configuration of a glass production system 1 according to an embodiment.

The glass production system 1 includes an information processing device 111, a database 112, and a glass production device 131.

In the present embodiment, the information processing device 111 and the database 112 are communicatively connected, and the database 112 and the glass production device 131 are communicatively connected.

The glass production device 131 includes a glass melting furnace 311.

In the present embodiment, the glass production device 131 includes a sensor unit 331 installed inside of the glass melting furnace 311 and a sensor unit 351 installed outside of the glass melting furnace 311.

The sensor unit 331 includes one or more sensors.

The sensor unit 351 includes one or more sensors.

In the present embodiment, the sensor unit 331 installed inside of the glass melting furnace 311 and the sensor unit 351 installed outside of the glass melting furnace 311 are described, but both thereof may not be necessarily provided and, for example, only one thereof may be provided.

When only one sensor unit (the sensor unit 331 or the sensor unit 351) is provided, the sensor unit includes a plurality of sensors.

The database 112 stores measurement data R1 which is data measured by the sensor unit 331 and the sensor unit 351.

In the present embodiment, an example in which the database 112 is provided separate from the information processing device 111 is described, but, for example, the function of the database 112 may be incorporated into the information processing device 111. In this case, the database 112 is not provided, and, for example, the information processing device 111 and the glass production device 131 are communicatively connected.

### <Information processing device>

In the present embodiment, the information processing device 111 is constituted by a computer. The information processing device 111 includes a processor such as a central processing unit (CPU) and performs various processes and various types of control by causing the processor to execute a predetermined program.

The information processing device 111 includes an input unit 211, an output unit 212, a communication unit 213, a storage unit 214, and a control unit 215.

The input unit 211 includes an operation unit 231.

The output unit 212 includes a display unit 251.

The control unit 215 includes a state estimating unit 271, a calibration parameter estimating unit 272, a model computing unit 273, an experimental design method executing unit 274, a prediction model generating unit 275, a change sensitivity evaluating unit 276, and an observation point data acquiring unit 277.

In the present embodiment, the calibration parameter estimating unit 272 includes the experimental design method executing unit 274, the prediction model generating unit 275, the change sensitivity evaluating unit 276, and the observation point data acquiring unit 277, but is not limited to this configuration.

The input unit 211 inputs information from an external device or a user (for example, a person). For example, the operation unit 231 receives an operation performed by the user and inputs information corresponding to the operation.

The output unit 212 outputs information to the external device or the user. For example, the display unit 251 includes a screen and displays and outputs information to be displayed on the screen. The information may be information of an arbitrary format and may be, for example, information of an image or information of numerical values.

The communication unit 213 communicates with an external device. The communication may be wired communication or wireless communication.

In the present embodiment, for the purpose of convenience of explanation, the communication unit 213 is illustrated as a functional unit other than the input unit 211 and the output unit 212, but, for example, the function of the communication unit 213 may be understood as being included in the input unit 211 and the output unit 212.

The storage unit 214 stores various types of information.

In the present embodiment, the storage unit 214 stores, for example, a glass melting furnace simulation model R11, a calibration parameter estimation model R12, a prediction model R13, and a simulation result R14.

In the present embodiment, a technique of using the prediction model R13 to estimate a calibration parameter using the calibration parameter estimation model R12 is described, but the prediction model R13 may not be used when another technique is used. In the present embodiment, for example, the prediction model R13 may be understood as a common model with respect to the calibration parameter estimation model R12.

Here, information stored in the database 112 and the storage unit 214 may be arbitrary.

Various types of information in the present embodiment may be stored in one of the database 112 and the storage unit 214 or may be stored in both.

In the present embodiment, information stored in the database 112 and the storage unit 214 is described, but other arbitrary information may be stored.

In the present embodiment, various types of data may be referred to as information.

The database 112 has a function of a measurement data storage unit and stores measurement data of a plurality of sensors which are installed inside or outside of the glass melting furnace 311 to measure values associated with molten glass.

The plurality of sensors are a plurality of sensors included in the sensor unit 331 and the sensor unit 351 in the present embodiment.

The state estimating unit 271 estimates a state of an actual machine using measurement data R1 stored in the measurement data storage unit (the database 112 in the present embodiment) and the glass melting furnace simulation model R11 modeling the glass melting furnace 311.

In the present embodiment, the actual machine is the glass melting furnace 311 in the actual glass production device 131.

Estimation may be referred to as, for example, prediction or assumption.

The calibration parameter estimating unit 272 estimates calibration parameters using the calibration parameter estimation model R12 for estimating calibration parameters of the glass melting furnace simulation model R11 and the measurement data R1 stored in the measurement data storage unit.

In this case, the state estimating unit 271 estimates the state of the actual machine using the calibration parameters estimated by the calibration parameter estimating unit 272.

In the present embodiment, for the purpose of convenience of explanation, parameters for calibrating the glass melting furnace simulation model R11 are described as calibration parameters, but may be referred to as another name and may be simply referred to as parameters.

The model computing unit 273 performs a computing operation of optimization calculation or sensitivity analysis using the glass melting furnace simulation model R11 or a summarization model based on the glass melting furnace simulation model R11 on the basis of an operation change guideline based on the state estimation result from the state estimating unit 271.

In the present embodiment, the summarization model is a model summarizing a phenomenon and includes, for example, an abridged model, a machine learning model, or both thereof.

Here, the operation change guideline may be instructed, for example, by a user or may be automatically generated and instructed by a device performing a predetermined process.

The computing operations of both the optimization calculation and the sensitivity analysis may be performed, or the optimization calculation may be performed, for example, using the computing result of the sensitivity analysis.

The output unit 212 outputs information on at least one of the state estimation result from the state estimating unit 271 and the computing result from the model computing unit 273.

An example configuration for estimating a calibration parameter will be described below. Another arbitrary method may be used as a method of estimating a calibration parameter.

The experimental design method executing unit 274 performs a plurality of simulations on the glass melting furnace simulation model R11 on the basis of an experimental design method in a range comprehensively including conditions assumed in an actual glass production process with an operation condition of the glass melting furnace 311 and the calibration parameter as configuration variables.

The storage unit 214 has a function of a simulation result storage unit and stores a simulation result R14 from the experimental design method executing unit 274.

The prediction model generating unit 275 generates the prediction model R13 by performing machine learning using the simulation result R14 stored in the simulation result storage unit (the storage unit 214 in the present embodiment).

The change sensitivity evaluating unit 276 evaluates change sensitivity by which the operation condition of the glass melting furnace 311 and the calibration parameter affect the simulation result of at least one of a molten glass temperature and a molten glass flow rate at a plurality of observation points of the glass melting furnace 311.

The observation point data acquiring unit 277 acquires the operation condition at a predetermined time point and acquires observation point data which is data of at least one of the molten glass temperature and the molten glass flow rate at the predetermined time point at a plurality of observation points in the glass melting furnace 311.

The calibration parameter estimating unit 272 estimates the calibration parameter on the basis of an evaluation result from the change sensitivity evaluating unit 276 such that a deviation between the observation point data acquired by the observation point data acquiring unit 277 and the result acquired through simulation at each observation point decreases.

The calibration parameter estimating unit 272 may limit a value range of the calibration parameter on the basis of a change in furnace material heat radiation due to the aging of the glass melting furnace 311.

### [Example of digital twin technique in glass melting process]

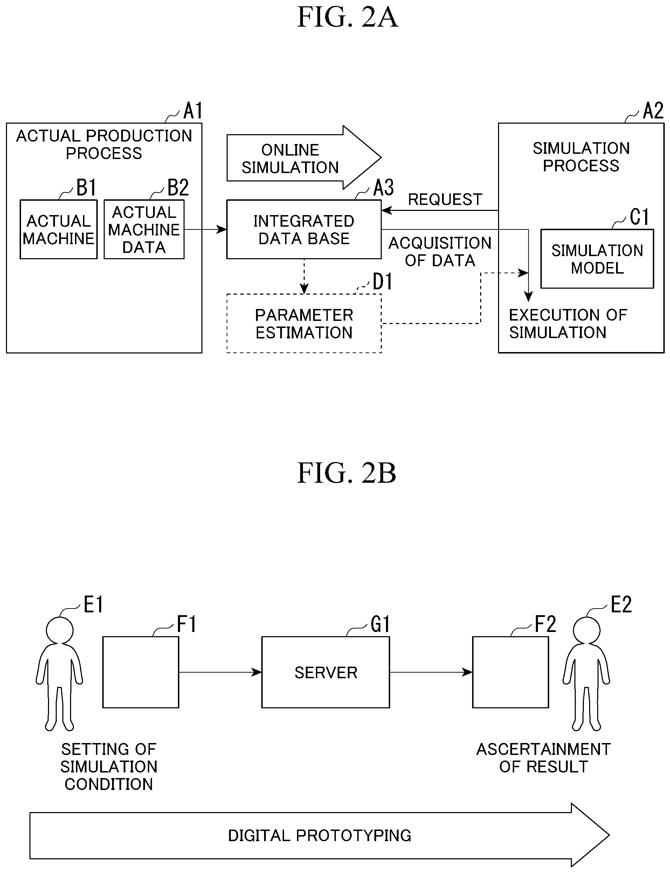

An example of a digital twin technique in the glass melting process will be described with reference to FIGS. 2A and 2B.

Digital twin is reproducing an environment of a real space in a virtual space on the basis of information on the real space.

An online simulator may have, for example, a function (an automatic function) of automatically generating a trigger using the online simulator as a function of generating a trigger for performing an operation, may have a function (a manual function) of generating a trigger in response to an input from a user, or may have both functions thereof.

When the trigger is automatically generated, the online simulator performs an operation, for example, at a predetermined timing (for example, a determined time of every day). When the trigger is generated through a manual operation, the online simulator performs an operation on the basis of information (trigger information) input from a user. In this case, for example, the user can input an instruction to perform an operation to the online simulator at an arbitrary timing and designate an arbitrary simulation period.

In the present embodiment, it is assumed that the online simulator is a system that generates and updates a simulation model in a virtual space in real time automatically. For example, the online simulator may be a system that generates and updates a simulation model for reproducing a state at an arbitrary time point in response to a user's operation.

A digital prototyping tool is a condition change simulation execution tool for sensitivity analysis and predictive examination.

As an example of the digital twin technique in the glass melting process, a system in which the online simulator and the digital prototyping tool are integrated has been developed. For example, it is considerable that an operation in a float kiln is verified using this system. With this technique, for example, it is possible to rapidly perform detailed state ascertainment of the glass melting process and prior examination of production conditions which were difficult in the related art.

As a summary, in the system, simulation based on a simulation model is performed by the online simulator using data from an actual production process. At this time, estimation of a parameter may be performed.

In the system, an optimal action, optimal design, information, and an added value are realized by digital prototyping.

Here, the online simulator and the digital prototyping tool may operate synchronously or may operate individually.

A specific example of an operation flow in the system includes following (Process L1) to (Process L4).

(Process L1) The system acquires operation data and actual state data. Here, the operation data is, for example, data such as a heat distribution by a burner or an electrical booster. The actual state data is, for example, data such as a temperature, a flow rate, a resistivity value, or quality.

(Process L2) The system automatically generates a simulation model for a current kiln using an online simulator. For example, the system may generate a simulation model for reproducing a kiln state at an arbitrary time point using information (trigger information) input from an online simulator and a user.

Here, for example, when both an automatic function and a manual function are possible, (Process L2) may be understood as including (Process L2a) of the automatic function and (Process L2b) of the manual function.

(Process L3) The system performs a simulation of case study in which operation conditions have been arbitrarily changed with reference to the simulation model.

(Process L4) The system reflects an optimal operation condition derived through the simulation in the actual machine and returns the operation flow to the process of (Process L1).

The internal temperature of the glass melting furnace or the convection of molten glass changes every day due to various factors such as raw materials and a state of firebricks and affects the quality of glass which is produced. The optimal operation condition needs to be derived again whenever these factors change, and thus there is a problem in that adjustment thereof requires time and a production volume in the meanwhile decreases.

Since the inside of the glass melting furnace is at a high temperature of 1600°C and it is difficult to understand details of the internal state thereof, simulation techniques for a glass melting process have been used in the related art, but collection of necessary data or the like requires time and thus it is difficult to perform simulation in a timely manner.

In order to solve such a problem, a simulation tool capable of ascertaining changes of the temperature distribution in the glass melting furnace, the convection of molten glass, and the like has been developed from a simulation model which is generated using the operation data of the glass melting furnace.

Accordingly, a process operator can simply perform ascertainment of a detailed internal state of the glass melting process and prior examination of production conditions which have been performed with time by a simulation operator in the related art.

FIG. 2A is a diagram schematically illustrating online simulation according to the embodiment.

A simulation model C1 for reproducing a state of an actual machine automatically (or with a manual trigger) through the online simulation is constructed.

In an actual production process A1, actual machine data B2 of an actual machine B1 is acquired. Here, operation information includes a production volume, a gas flow rate, electric power, Pull, or a batch ratio. The data of the actual state includes a temperature, a quality, or a composition.

An integrated data infrastructure A3 saves (stores) the actual machine data B2.

In a simulation process A2 of online simulation, when a trigger has occurred, the process flow is automatically performed.

Specifically, in the simulation process A2, a data request (for example, a simulation execution request) is issued to the integrated data infrastructure A3, data is acquired from the integrated data infrastructure A3, an input file is prepared, and simulation is executed using the simulation model C1.

At this time, for example, parameter estimation D1 may be performed on the basis of data from the integrated data infrastructure A3, and the estimated parameter may be used in the simulation.

In the simulation process A2, the timing at which data is acquired using the data request may be arbitrary, or the data may be normally acquired, for example, by issuing a data request at intervals of a predetermined time.

In the simulation process A2, a user may designate an arbitrary date and time to issue a data request. At this time, a process flow after the user has issued the data request (for example, information serving as a trigger) is automatically performed.

FIG. 2B is a diagram schematically illustrating digital prototyping according to the embodiment.

The digital prototyping enables simulation of sensitivity analysis and predictive examination to be simply executed.

Here, the simulation model C1 acquired in the online simulation is used.

A user E1 operates a computer F1 to set simulation conditions. A server G1 executes simulation on the basis of the simulation conditions.

At this time, for example, a regression model based on actual machine data may be generated and used.

The server G1 may be a cloud server or an on-premises server.

A user E2 ascertains a result of the simulation using a computer F2. For example, the user E2 and the computer F2 may be the same as the user E1 and the computer F1 or may be different therefrom.

Here, in the server G1, a simulation of estimating a current kiln state, a condition change simulation, or change prediction using a summarization model (for example, an abridged model or a machine learning model) may be performed. For example, an abridged model may be generated on the basis of results of a plurality of simulations by machine learning.

A problem in a glass production site can be solved for a short time through the online simulation and the digital prototyping technique.

Here, in the present embodiment, online simulation is performed, but, for example, a configuration in which a simulation is executed using an offline device (for example, a computer) may be used.

### [Glass melting furnace]

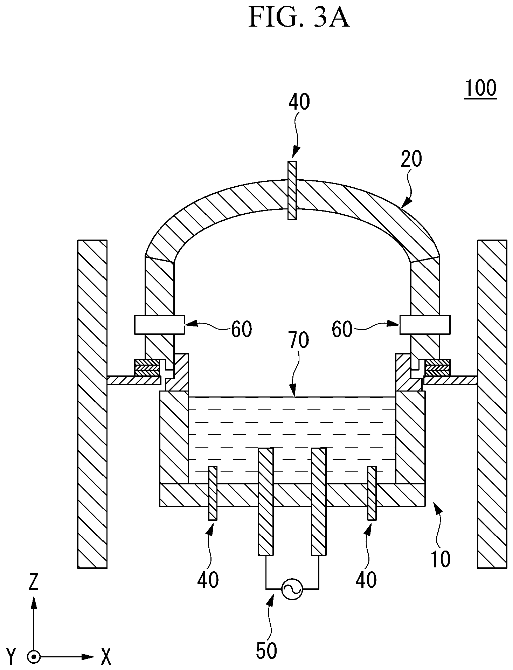

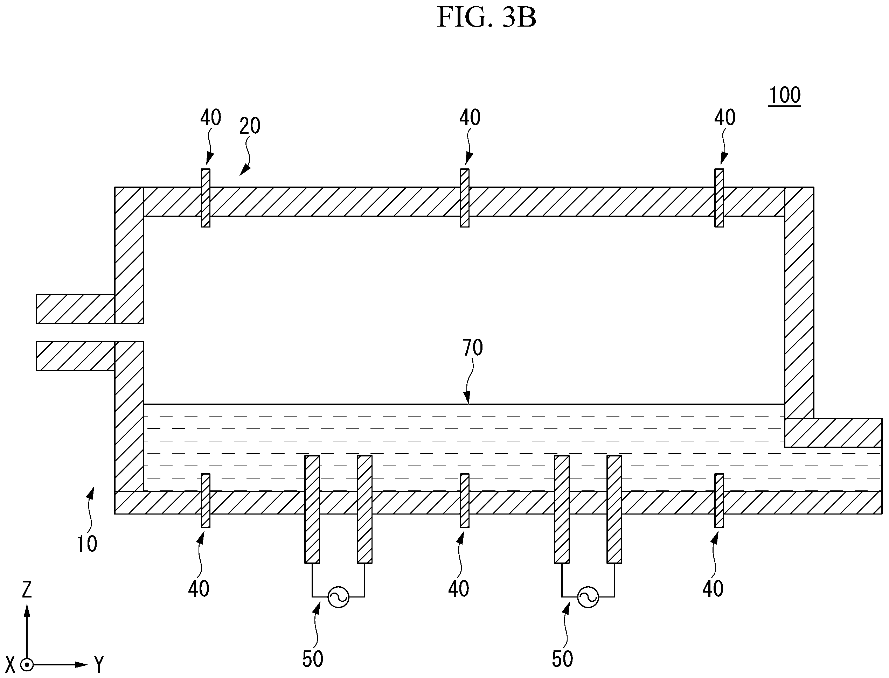

A glass melting kiln 100 will be described below as an example of the glass melting furnace with reference to FIGS. 3A and 3B. A kiln with another configuration may be used as the glass melting kiln.

Although not illustrated in FIGS. 3A and 3B, a plurality of sensors (sensors included in one or both of the sensor unit 331 and the sensor unit 351 in the example illustrated in FIG. 1) may be provided inside or outside of the glass melting kiln 100 according to necessity.

FIG. 3A is a diagram illustrating an example of a cross-section of the glass melting kiln 100 according to the embodiment.

FIG. 3B is a diagram illustrating an example of another cross-section of the glass melting kiln 100 according to the embodiment.

In FIGS. 3A and 3B, an XYZ orthogonal coordinate system which is a three-dimensional orthogonal coordinate system is illustrated for the purpose of convenience of explanation.

A sectional view of the XZ plane of the glass melting kiln 100 is illustrated in the example of FIG. 3A, and a sectional view of the YZ plane of the glass melting kiln 100 is illustrated in the example of FIG. 3B.

In FIGS. 3A and 3B, the XY plane is a horizontal plane. As illustrated in FIGS. 3A and 3B, the glass melting kiln 100 includes a melting bath 10 (a glass melting furnace) in which a glass material 70 (the glass material 70 represents a raw glass material before being molten, represents molten glass into which the raw glass material is molten after being molten, and may include a state in which they are mixed for the purpose of convenience of explanation, which is true in the following description) is supplied to the inside thereof, a plurality of power supply electrodes 50, a plurality of thermocouples 40, a top structure 20 covering the top of the melting bath 10, and a plurality of burners 60.

The glass melting kiln 100 melts the glass material 70 through burner combustion of the burners 60 and application of voltages to the power supply electrodes 50. The glass material 70 which is supplied from the left end of FIG. 3B and is molten flows in a positive Y-axis direction and is taken out from the right end of FIG. 3B. A plurality of burners 60 are arranged in the Y-axis direction (the flow direction of the glass material 70) on both side surfaces of the top structure 20. Each burner 60 heats the surface of the glass material 70 near the position of the burner 60 by burner combustion. Accordingly, a heat distribution (a distribution in the flow direction of the glass material 70 and the width direction of the melting bath 10) on the surface of the glass material 70 is acquired according to an amount of gas supplied to the plurality of burners 60.

A plurality of pairs of the power supply electrodes 50 to which a voltage is applied are arranged in the Y-axis direction (the flow direction of the glass material 70) and one or more power supply electrodes 50 are arranged in the X-axis direction (the width direction of the melting bath 10) to protrude from the bottom of the melting bath 10. Each pair of the power supply electrodes 50 heats the glass material 70 between the power supply electrodes 50 of the corresponding pair through application of a voltage thereto. Accordingly, a heat distribution in the glass material 70 (a distribution in the flow direction of the glass material 70 and the width direction of the melting bath 10) is acquired according to the voltage applied to the plurality of pairs of the power supply electrodes 50. A heat distribution in the depth direction of the melting bath 10 is acquired according to an amount of gas supplied to the burners 60 and the voltage applied to the corresponding pair of the power supply electrodes 50. For the purpose of simplification of illustration, only one pair of power supply electrodes 50 is illustrated in the example of FIG. 3A, but a plurality of pairs may be disposed in the XZ cross-section.

Each thermocouple 40 disposed in the bottom of the melting bath 10 measures (detects) the temperature of the glass material 70 on the bottom of the melting bath 10. Each thermocouple 40 disposed in the top structure 20 measures one or both of the atmosphere temperature of the upper part in the glass melting kiln 100 and the temperature of the top structure 20 instead of the surface temperature of the glass material 70.

On the bottom of the melting bath 10, a plurality of thermocouples 40 are arranged in the Y-axis direction (the flow direction of the glass material 70) and a plurality of thermocouples 40 are arranged in the X-axis direction (the width direction of the melting bath 10). A plurality of thermocouples 40 are arranged in the Y-axis direction on the top structure 20. Accordingly, the temperature distribution in the glass material 70 (the distribution in the flow direction of the glass material 70 and the width direction of the melting bath 10) on the bottom of the melting bath 10 can be measured by the plurality of thermocouples 40 arranged on the bottom of the melting bath 10. The temperature distribution (a distribution in the flow direction of the glass material 70) on the surface of the glass material 70 can be measured by the plurality of thermocouples 40 arranged in the top structure 20. Here, the temperature distribution on the surface of the glass material 70 may include, for example, the temperature distribution on the surface of the pre-melting glass material supplied from the left end in the example of FIG. 3B in addition to the temperature distribution on the surface of the molten glass material 70. The temperature distribution on the surface of the pre-melting glass material can be measured by the thermocouple 40 at the left end of FIG. 3B disposed in a supply port of the glass material 70.

Each pair of power supply electrodes 50 can measure the temperature of the glass material 70 between the electrodes of the pair by detecting a current (or a resistance value) in the pair. Accordingly, a temperature distribution (a distribution in the flow direction of the glass material 70 and the width direction of the melting bath 10) of the glass material 70 in the middle of the melting bath 10 can be measured by the plurality of pairs of power supply electrodes 50. The temperature distribution in the depth direction of the melting bath 10 is acquired by combining two or more of the thermocouple 40 disposed on the bottom of the melting bath 10, the thermocouple 40 disposed in the top structure 20, and the pairs of power supply electrodes 50. For example, a flow rate distribution on the surface of the glass material 70 is acquired by imaging the surface of the glass material 70 using a video camera (not illustrated) and analyzing the captured image. Here, this analysis is performed, for example, by detecting a moving speed of bubbles or the like in the glass material 70.

### [Example of information processing]

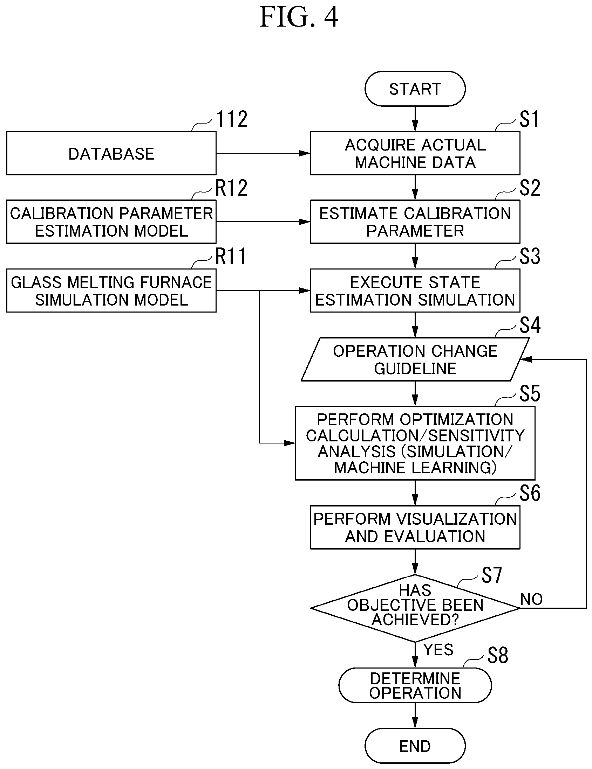

An example of a process flow that is performed by the information processing device 111 will be described below with reference to FIGS. 4 to 6. In this example, it is assumed that time-series data is acquired as the actual measurement data R1.

In this example, it is assumed that the measurement data R1, the glass melting furnace simulation model R11, the calibration parameter estimation model R12, and the prediction model R13 are acquired in advance.

FIG. 4 is a diagram illustrating an example of the process flow that is performed by the information processing device 111 according to the embodiment.

### (Step S1)

In the information processing device 111, the control unit 215 acquires actual machine data. Then, the process flow proceeds to the process of Step S2.

Here, in this example, the actual machine data is time-series measurement data R1.

### (Step S2)

In the information processing device 111, the calibration parameter estimating unit 272 estimates a calibration parameter. Then, the process flow proceeds to the process of Step S3.

Here, in this example, the calibration parameter estimating unit 272 estimates the calibration parameter using the measurement data R1 and the calibration parameter estimation model R12.

### (Step S3)

In the information processing device 111, the state estimating unit 271 estimates an actual state. Then, the process flow proceeds to the process of Step S4.

Here, in this example, the state estimating unit 271 estimates the actual state using the measurement data R1, the glass melting furnace simulation model R11, and the estimated calibration parameter.

As the state estimation, for example, estimation of the state in a predetermined period (for example, a year-month-day date or a month-day date or a date and time) is performed. In this case, a value in the period (for example, a year-month-day date or a month-day date or a date and time) is estimated in estimation of the calibration parameter. As the period, for example, a time (for example, an elapsed time) after the actual machine has been used may be used.

For example, instead of directly designating the predetermined period, the period may be indirectly designated in another condition. For example, a condition in which the temperature of a predetermined part (for example, the temperature of molten glass) is a predetermined value may be used as the other condition.

### (Step S4)

In the information processing device 111, an operation change guideline is acquired on the basis of the result of actual state estimation. Then, the process flow proceeds to the process of Step S5.

Here, in this example, a user reviews the operation change guideline on the basis of the result of actual state estimation and operates the operation unit 231 to input the determined operation change guideline to the information processing device 111.

For example, the information processing device 111 may use a configuration in which the control unit 215 or the like automatically performs a process of reviewing the operation change guideline on the basis of the result of actual state estimation.

Here, various guidelines may be used as the operation change guideline, and the operation change guideline may be determined, for example, in consideration of one or more of an increase or a decrease in an amount of gas used, an increase or a decrease in the amount of electricity used, adjustment of a convection situation with change of the bubbler flow rate, and improvement in quality of glass.

### (Step S5)

In the information processing device 111, the model computing unit 273 performs a computing operation of optimization calculation or sensitivity analysis using the glass melting furnace simulation model R11 or a summarization model based on the glass melting furnace simulation model R11 on the basis of the operation change guideline. Then, the process flow proceeds to the process of Step S6.

Here, this computing operation is performed such that the operation change guideline is realized.

When a summarization model is used, for example, the model computing unit 273 generates the summarization model on the basis of the simulation result R14 of the glass melting furnace simulation model R11.

In the processes of Steps S4 to S7 in the first process flow, for example, change prediction using a condition change simulation may be performed, or change prediction using a summarization model (for example, an abridged model or a machine learning model) may be performed.

### (Step S6)

In the information processing device 111, the output unit 212 outputs information on a result of the computing operation of optimization calculation or sensitivity analysis. Then, the process flow proceeds to the process of Step S7.

Here, in this example, the information is displayed and visualized, for example, on the screen of the display unit 251. Then, a user can evaluate the information by seeing the information.

For example, when the information processing device 111 automatically performs evaluation, the information may not be output.

### (Step S7)

In the information processing device 111, the process flow proceeds to the process of Step S8 when the control unit 215 determines that an objective has been achieved on the basis of the result of evaluation, and the process flow proceeds to the process of Step S4 when it is determined that the objective has not been achieved.

Here, in this example, by allowing a user to operate the operation unit 231 to input information indicating whether the objective has been achieved to the information processing device 111, the control unit 215 determines whether the objective has been achieved.

For example, a configuration in which the information processing device 111 automatically determines whether the objective has been achieved may be used.

### (Step S8)

Operation determination is performed, and this process flow ends.

In this example, operation determination is performed by a user, but, for example, the same process as the operation determination may be performed by the information processing device 111.

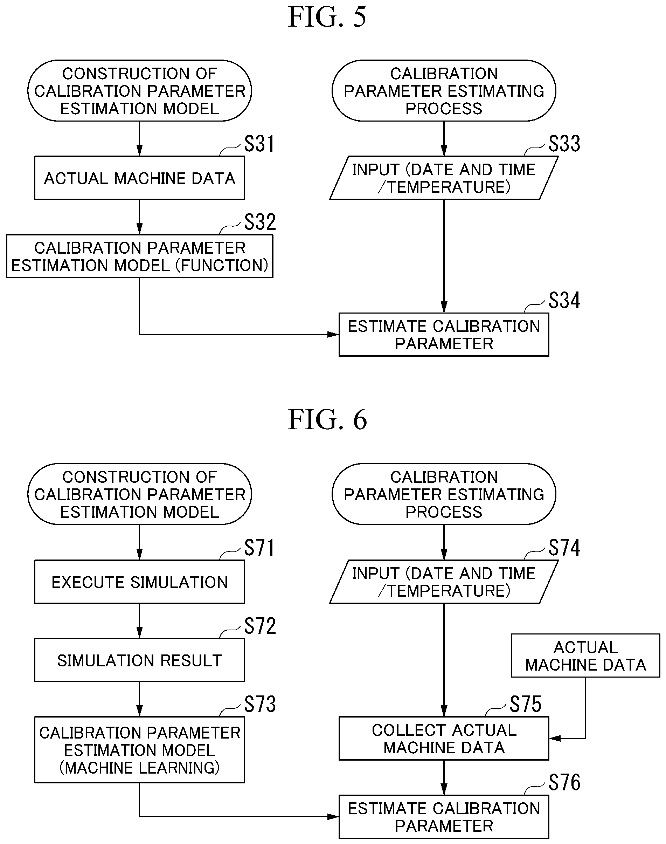

An example of the calibration parameter estimating process will be described below with reference to FIGS. 5 and 6.

FIG. 5 illustrates an example in which a function is used (machine learning is not used).

FIG. 6 illustrates an example in which machine learning is used.

### <Example of calibration parameter estimating process>

FIG. 5 is a diagram illustrating an example of a flow of the calibration parameter estimating process that is performed by the information processing device 111 according to the embodiment.

Roughly, a calibration parameter estimation model is constructed in the processes of Steps S31 to S32, and the calibration parameter estimating process is performed using the calibration parameter estimation model in the processes of Steps S33 to S34.

### (Step S31)

In the information processing device 111, the control unit 215 acquires actual machine data. Then, the process flow proceeds to the process of Step S32.

Here, in this example, the time-series measurement data R1 is used as the actual machine data.

### (Step S32)

In the information processing device 111, the control unit 215 constructs the calibration parameter estimation model using a function.

Here, in the calibration parameter estimation model using a function, for example, a calibration parameter is calculated using the function according to a simulation condition. That is, the function has the condition as a variable and has the calibration parameter as a solution.

### (Step S33)

In the information processing device 111, the control unit 215 inputs information which is the simulation condition. Then, the process flow proceeds to the process of Step S34.

Here, for example, the information may be instructed (input) to the information processing device 111 by a user who operates the operation unit 231 or may be instructed (input) to the information processing device 111 from another device.

The condition may be, for example, a condition such as the date and time (or which may be a year-month-day date or a month-day date or the like) or the temperature.

### (Step S34)

In the information processing device 111, the calibration parameter estimating unit 272 performs the calibration parameter estimating process on the basis of the calibration parameter estimation model using a function.

Accordingly, the information processing device 111 obtains an estimation result of a calibration parameter.

### <Another example of calibration parameter estimating process>

FIG. 6 is a diagram illustrating another example of the flow of the calibration parameter estimating process that is performed by the information processing device 111 according to the embodiment.

Roughly, a calibration parameter estimation model is constructed in the processes of Steps S71 to S73, and the calibration parameter estimating process is performed using the calibration parameter estimation model in the processes of Steps S74 to S76.

### (Step S71)

In the information processing device 111, the control unit 215 (for example, the state estimating unit 271) performs a simulation for constructing a database for preparing the calibration parameter estimation model. Then, the process flow proceeds to the process of Step S72.

### (Step S72)

In the information processing device 111, the control unit 215 acquires a simulation result. Then, the process flow proceeds to the process of Step S73.

### (Step S73)

In the information processing device 111, the control unit 215 constructs the calibration parameter estimation model using machine learning.

Here, in the calibration parameter estimation model using machine learning, the value of the calibration parameter is determined on the basis of the output value of the model, for example, by inputting predetermined information to the machine learning model.

In this example, the model receives an input of a simulation condition and actual machine data (the time-series measurement data R1 in this example) and outputs a value of the calibration parameter or information for acquiring the value of the calibration parameter.

### (Step S74)

In the information processing device 111, the control unit 215 inputs information which is the simulation condition. Then, the process flow proceeds to the process of Step S75.

Here, for example, the information may be instructed (input) to the information processing device 111 by a user who operates the operation unit 231 or may be instructed (input) to the information processing device 111 from another device.

The condition may be, for example, a condition such as the date and time (or which may be a year-month-day date or a month-day date or the like) or the temperature.

### (Step S75)

In the information processing device 111, the control unit 215 collects (acquires) actual machine data. Then, the process flow proceeds to the process of Step S76.

Here, in this example, the time-series measurement data R1 is used as the actual machine data.

### (Step S76)

In the information processing device 111, the calibration parameter estimating unit 272 performs the calibration parameter estimating process on the basis of the calibration parameter estimation model using machine learning.

Accordingly, the information processing device 111 obtains an estimation result of the calibration parameter.

### <Specific example of calibration parameter estimating process>

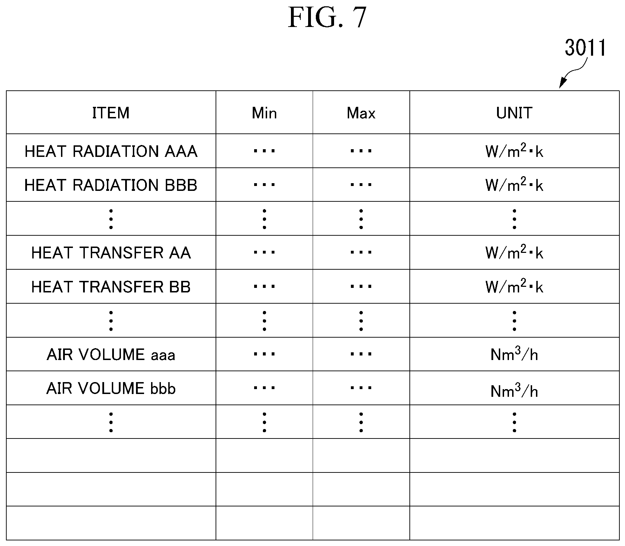

A specific example of the calibration parameter estimating process will be described below with reference to FIGS. 7 and 8 and FIGS. 9A to 9C.

FIG. 7 is a diagram illustrating a table 3011 showing an example of the calibration parameter according to the embodiment. Here, in this example, an example of the calibration parameter is shown in the form of a table, but the form of a table may not be used.

Calibration parameters are schematically shown in the table 3011.

In the table 3011, an item of each calibration parameter, a minimum value (Min) associated with a limit, a maximum value (Max) associated with the limit, and a unit are stored in correlation.

The information stored in the table 3011 is a rough example and is not actual information. In this example, a plurality of calibration parameters are set. The plurality of calibration parameters may include, for example, an item which it is difficult to measure (actually detect) in real time.

In the example illustrated in FIG. 7, for example, Min of "... ("..." indicates a corresponding numerical value, which is true of the following description)," Max of "...," and a unit of [W/m²·K] are stored in correlation with the calibration parameter with an item of "heat radiation AAA."

For example, Min of "...," Max of "...," and a unit of [W/m²·K] are stored in correlation with the calibration parameter with an item of "heat transfer AA." For example, Min of "...," Max of "...," and a unit of [Nm³/h] are stored in correlation with the calibration parameter with an item of "air volume aaa." Similarly, in the example illustrated in FIG. 7, information on calibration parameters with other items is stored.

Here, in this example, the calibration parameter estimating unit 272 estimates (determines) a value in a range between the minimum value (Min) and the maximum value (Max) associated with each limit as an estimated value of each calibration parameter.

For example, only the minimum value (Min) may be set or only the maximum (Max) may be set as such a limit.

The value associated with the limit may be set, for example, on the basis of past results.

This limit may not be set. When the limit is not set, the calibration parameter estimating unit 272 may estimate (determine) an arbitrary value as the estimated value of each calibration parameter.

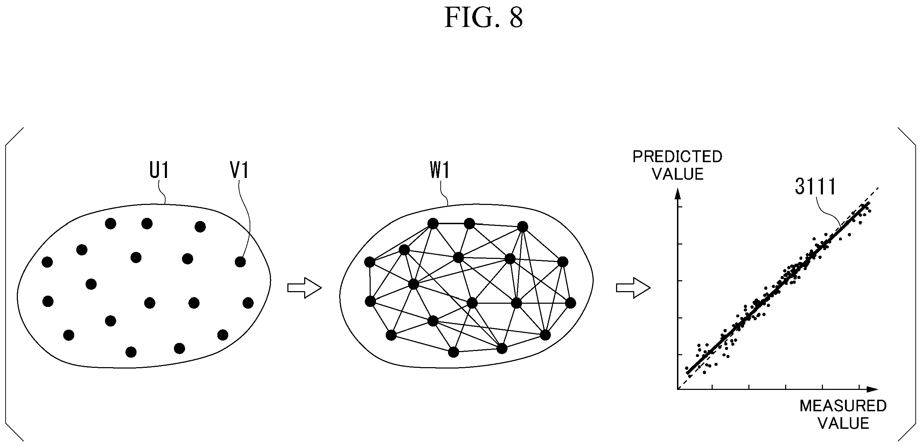

FIG. 8 is a diagram schematically illustrating a first process of the specific example of the calibration parameter estimating process according to the embodiment.

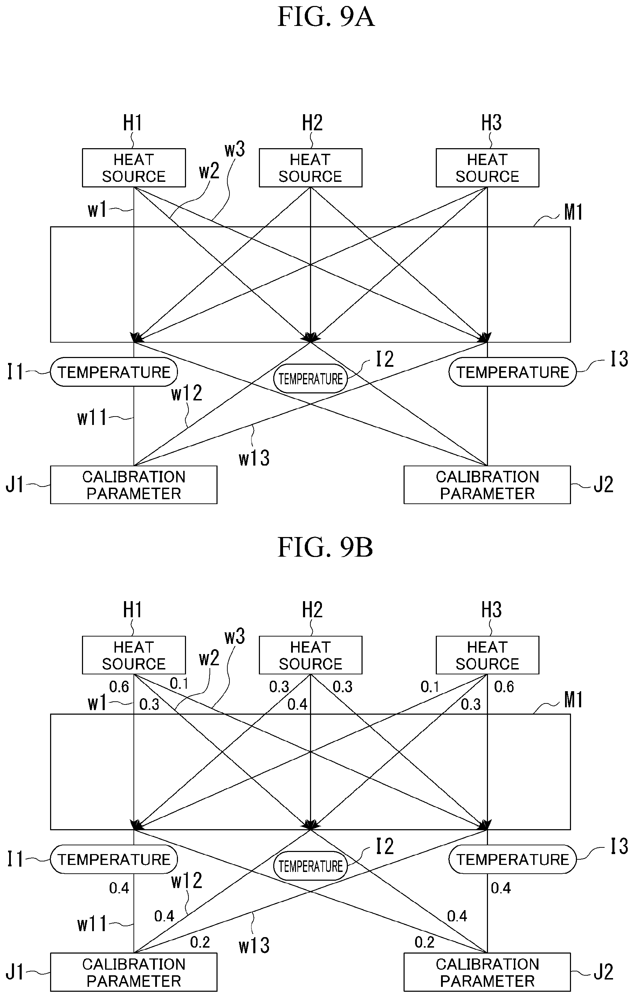

FIG. 9A is a diagram schematically illustrating a result of the first process of the specific example of the calibration parameter estimating process according to the embodiment.

FIG. 9B is a diagram schematically illustrating a second process of the specific example of the calibration parameter estimating process according to the embodiment.

Here, names such as the first process and the second process are for the purpose of convenience of explanation, and may be replaced with other names.

### (First process)

In the first process, the information processing device 111 performs a simulation under comprehensive operation conditions and generates a machine learning model on the basis of the simulation result.

In this example, it is assumed that a machine learning model for predicting a temperature is generated as the machine learning model.

For example, a machine learning model for predicting a physical quantity other than the temperature may be generated.

In the first process, the experimental design method executing unit 274 performs a simulation of the glass melting furnace simulation model R11 under comprehensive conditions using an experimental design method.

The conditions include, for example, operation conditions of the glass melting furnace 311 and conditions of a plurality of calibration parameters (values of a plurality of calibration parameters in this example).

The operation conditions of the glass melting furnace 311 are, for example, conditions associated with heat input. For example, an amount of gas, an output of electrical boosting, or a control state of a bubbler may be used as the conditions associated with heat input.

As a mode for realizing the comprehensive conditions, for example, a mode including (almost including) a predetermined range (between an upper limit and a lower limit) by mechanically determining a combination of a plurality of parameters using a number which is random (a random number) in the predetermined range may be used. A mode using other conditions while using the random number may be used.

In FIG. 8, a universal set U1 of conditions is indicated by a frame, and each of a plurality of conditions (simulation conditions) included in the universal set U1 is indicated by a dot. In the example illustrated in FIG. 8, one condition V1 is representatively referred to as a reference sign for the purpose of simplification of illustration.

Here, since the number of all conditions included in the universal set U1 may be infinite, for example, the experimental design method executing unit 274 performs a simulation under a finite number of conditions. One simulation is performed for each condition.

Accordingly, a database including results of a plurality of simulations is generated.

The prediction model generating unit 275 generates a prediction model R13 on the basis of a result of a simulation performed for each of a plurality of conditions.

Here, in this example, a machine learning model is generated as the prediction model R13.

FIG. 8 schematically illustrates a state in which a machine learning model for predicting a simulation result (a pseudo simulation result) between the simulation results (in FIG. 8, between points) is generated by performing machine learning in the set of simulation results (a simulation result group W1).

A simulation result (a pseudo simulation result) corresponding to an arbitrary condition can be predicted using the generated prediction model R13.

In FIG. 8, characteristics 3111 indicating a relationship between values (predicted values) predicted by the prediction model R13 (a machine learning model for predicting a temperature in this example) and actual values (measured values) are illustrated for a predetermined temperature of the glass melting furnace 311.

In the example illustrated in FIG. 8, one predetermined temperature is illustrated, but a plurality of temperatures may be predicted using the prediction model R13. In this case, the graph illustrated in FIG. 8 is acquired for each of the plurality of temperatures.

In this way, in this example, the prediction model R13 with high prediction is generated.

It is possible to quantify sensitivity by which the operation variables and the calibration parameters affect the simulation results using the prediction model R13.

The sensitivity is, for example, the same as a weight value of weighting and may be referred to as weighting.

### (Second process)

In the second process, actual conditions (conditions of the glass melting furnace 311) at an arbitrary time point is introduced into the prediction model R13, and the value of the actual machine is estimated.

In FIG. 9A, a model of a glass melting furnace (a glass melting furnace model M1), three heat sources H1 to H3, three temperatures I1 to I3 at three positions, and two calibration parameters J1 and J2 are illustrated. Here, the drawing is illustrated in two dimensions, but the glass melting furnace model M1 is a three-dimensional model (for example, a model in the XYZ orthogonal coordinate system). For example, temperatures at a plurality of positions (observation points) which are three-dimensionally arranged are used as the plurality of temperatures I1 to I3.

In this example, the number of heat sources, the number of temperatures, and the number of calibration parameters are merely examples, and the present disclosure is not limited thereto.

The change sensitivity evaluating unit 276 can quantify a change sensitivity value (a sensitivity coefficient) of each variable from the simulation results on the basis of the result of the first process.

The observation point data acquiring unit 277 acquires data at each observation point (data of the temperature of molten glass in this example).

In the example illustrated in FIG. 9A, sensitivity w1 is sensitivity with which the heat source H1 affects the temperature I1, sensitivity w2 is sensitivity with which the heat source H1 affects the temperature I2, and sensitivity w3 is sensitivity with which the heat source H1 affects the temperature I3.

For the other heat sources (the heat source H2 and the heat source H3), there is sensitivity for each of the plurality of temperatures I1 to I3, a method of calculating sensitivity is the same as for the heat source H1, and illustration and detailed description thereof are omitted in this example.

In the example illustrated in FIG. 9A, sensitivity w11 is sensitivity with which the calibration parameter J1 affects the temperature I1, sensitivity w12 is sensitivity with which the calibration parameter J1 affects the temperature I2, and sensitivity w13 is sensitivity with which the calibration parameter J1 affects the temperature I3.

For the other calibration parameter (the calibration parameter J2), there is sensitivity for each of the plurality of temperatures I1 to I3, a method of calculating sensitivity is the same as for the calibration parameter J1, and illustration and detailed description thereof are omitted in this example.

Here, in the example illustrated in FIG. 9A, amounts of heat of the heat sources H1 to H3, the temperatures I1 to I3, and the calibration parameters J1 and J2 are known in the experimental design method, and only the sensitivity is unknown. Accordingly, the sensitivity is calculated.

FIG. 9B is a diagram illustrating a configuration in which the sensitivity values are added to FIG. 9A.

In the example illustrated in FIG. 9B, the sensitivity w1 is 0.6, the sensitivity w2 is 0.3, the sensitivity w3 is 0.1, the sensitivity w11 is 0.4, the sensitivity w12 is 0.4, the sensitivity w13 is 0.2, and other sensitivity is the same as illustrated in the drawing.

Here, in an actual machine, the amounts of heat of the heat sources H1 to H3 and the temperatures I1 to I3 are known, and only the calibration parameters J1 and J2 are unknown. Accordingly, the calibration parameters J1 and J2 are calculated using the calculated sensitivity.

Accordingly, the calibration parameter estimating unit 272 estimates (presumptively calculates) the calibration parameters J1 and J2.

A specific example of the calibration parameter estimating process according to the embodiment will be described below.

For the purpose of convenience of explanation, a first mathematical expression part K1 and a second mathematical expression part K2 will be divisionally described.

In the following description, (Process Q1) to (Process Q4) will be sequentially described.

### (Process Q1)

In this example, it is assumed that a simulation under several tens to several hundreds of conditions is performed using the experimental design method. The conditions include the operation conditions of the glass melting furnace 311 and the conditions of the calibration parameters, that is, the values of the calibration parameters are also used as variables.

In the first mathematical expression part K1, reference signs in which numerical values are added to x (x1, x2, x3, ...) represent operation variables, and coefficients (a1, a2, ..., b1, b2, ..., c1, c2, ..., and the like) thereof represent sensitivity.

For example, variables associated with a gas, an EB output, or a bubbler flow rate may be used as the operation variables.

Reference signs in which numerical values are added to p (p1, p2, p3, ...) represent the calibration parameters, and coefficients (α1, α2, ..., β1, β2, ..., γ1, γ2, ..., and the like) thereof represent sensitivity.

The calibration parameters may include, for example, an amount of furnace wall heat radiation and an amount of tertiary air.

In this step, values used in the experimental design method are substituted into the calibration parameters.

Reference signs in which numerical values are added to T (T1, T2, T3, ...) represent temperatures of observation points to be matched with actual results.

The temperatures may include, for example, a temperature at a bottom of the melting furnace or a temperature at a crown of the melting furnace.

### (Process Q2)

Here, the prediction model R13 is generated such that the same number of expressions as the number of observation points (the number of temperatures) to be matched in the first mathematical expression part K1 are established.

In the first mathematical expression part K1, there is an expression indicating that a sum result of multiplication results of the operation variables and the coefficients and multiplication results of the calibration parameters and the coefficients is equal to the temperature at the observation point, and this expression is provided for each combination of a plurality of types of coefficients.

In the first mathematical expression part K1, the sensitivities (the coefficients) are unknown, and each sensitivity is calculated by performing regression analysis using a data set acquired through a simulation. The same number of times of regression analysis as the number of positions of the temperatures to be matched are performed. That is, for example, when the number of positions of the temperatures to be matched is five, five times of regression analysis are performed.

In this example, a linear model is used as each expression in the first mathematical expression part K1, but a nonlinear model may be used in another example.

Another analysis method may be used instead of the regression analysis. For example, a Bayesian estimation method instead of a maximum likelihood estimation method may be used as the estimation method.

### (Process Q3)

Then, in the first mathematical expression part K1, values based on actual machine data are substituted into values other than the calibration parameters (p1, p2, p3, ...) after each sensitivity has been calculated. In this case, a term associated with the operation variables (x1, x2, x3, ...) is a constant term, and the calibration parameters (p1, p2, p3, ...) are unknown.

Then, a product of a matrix including all coefficients associated with a plurality of calibration parameters as elements and a vector of the plurality of calibration parameters is assumed as the left side of the second mathematical expression part K2, and a term (ΔT1, ΔT2, ΔT3, ...) is assumed as the right side of the second mathematical expression part K2.

Then, a problem of simultaneous equations is resulted in by the matrix included in the second mathematical expression part K2. Here, the term (ΔT1, ΔT2, ΔT3, ...) of the right side in the second mathematical expression part K2 is constant.

In this example, whether to use data of a period (for example, a year-month-day date or a month-day date or a date and time) as actual machine data may be arbitrarily determined.

### (Process Q4)

Then, in this example, unknown calibration parameters are estimated using a maximum likelihood estimation method or a Bayesian estimation method.

Here, in the present embodiment, the temperature of molten glass is used as an item serving as a reference for adjusting (matching with an appropriate value) a calibration parameter, but items such as the resistivity of molten glass, the current value between heating electrodes, the voltage value between heating electrodes, the resistance value between heating electrodes, and the flow rate of molten glass may be used in another example, or a combination of two or more items thereof may be used.

### <Example of estimation result of calibration parameter>

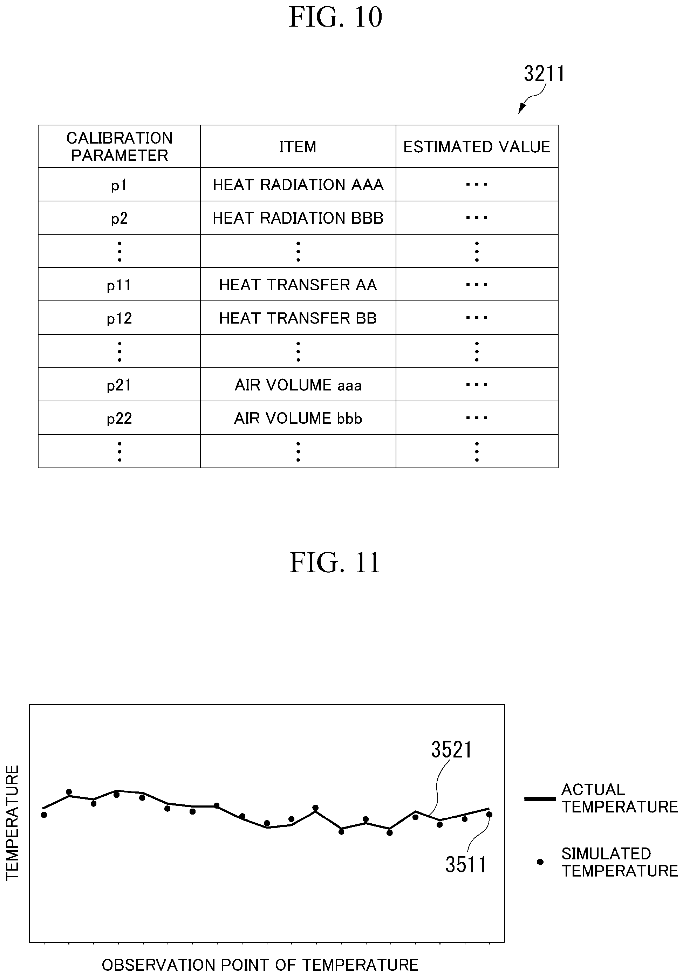

FIG. 10 is a diagram illustrating a table 3211 showing an example of an estimation result of a calibration parameter according to the embodiment.

Here, in this example, an example of the calibration parameters is shown in the form of a table, but the form of a table may not be used.

Estimation results of the calibration parameters are schematically shown in the table 3211.

In the table 3211, reference signs (p1, p2, ...) indicating the calibration parameters, items of the calibration parameters, and estimated values of the calibration parameters are stored in correlation.

The information stored in the table 3211 is an example and is not actual information.

In the example illustrated in FIG. 10, for example, an estimated value of "... ("..." indicates the corresponding numerical value, which is true of the following description)" is stored in correlation with the calibration parameter of an item "heat radiation AAA" indicated by reference sign "p1."

For example, an estimated value of "..." is stored in correlation with the calibration parameter of an item "heat transfer AA" indicated by reference sign "p11."

For example, an estimated value of "..." is stored in correlation with the calibration parameter of an item "air volume aaa" indicated by reference sign "p21."

Similarly, in the example illustrated in FIG. 10, information on the calibration parameters of other items is stored.

In the example illustrated in FIG. 10, the estimated values of the calibration parameters are estimated in an actual result range and are values included in the range between the minimum value (Min) and the maximum value (Max) associated with the limits illustrated in FIG. 7.

FIG. 11 is a diagram illustrating an example of comparison between characteristics of a simulation result using the estimation results of calibration parameters according to the embodiment and characteristics of actual machine data. The example of comparison is not an actually acquired result and has been subjected to schematic processing for the purpose of explanation.

In the example illustrated in FIG. 11, examples of comparison are illustrated for the temperatures at predetermined positions.

In the graph illustrated in FIG. 11, the horizontal axis represents a temperature measuring point, and the vertical axis represents a temperature. Specific scales are omitted in the horizontal axis and the vertical axis.

In the graph, characteristics of the temperatures in the simulation result are indicated by dots, and characteristics (characteristics 3521) of the temperature of the actual machine are indicated by a line.

In the example illustrated in FIG. 11, only one dot (characteristics 3511) out of the dots in a plurality of simulation results is referred to as a reference sign for the purpose of simplification of illustration.

In the example illustrated in FIG. 11, the simulation results substantially reproduce the temperature levels and distributions at a plurality of observation points for the characteristics 3521 of the temperature of the actual machine, and characteristics with high precision are obtained.

As described above, in the glass production system 1 according to the present embodiment, it is possible to achieve an increase in support efficiency using a simulation through realization of an automatic simulation in glass production in comparison with the related art (for example, a case in which a simulation is performed by a process operator and a full-time worker for analysis).

For example, in the related art (for example, a case in which a simulation is performed by a process operator and a full-time worker for analysis), the amount of heat radiation or the like is set through comparison between results for one to two months on the basis of information of an actual kiln, then a base flow result of the glass melting furnace is estimated through execution of a simulation for about one to two weeks, and thus a considerable time is required.

On the other hand, in the information processing device 111 according to the present embodiment, an amount of heat radiation or the like can be set through comparison between results for a short time (for example, several tens of minutes) on the basis of information of an actual kiln, and then a base flow result of the glass melting furnace can be estimated through execution of a simulation for a short time (for example, several hours). This required time is an example for explanation, and the present disclosure is not limited to this time.

Accordingly, in the glass production system 1 according to the present embodiment, anyone can obtain an evaluation result of a circulation state of molten glass in a timely manner.

In the glass production system 1 according to the present embodiment, by estimating values of calibration parameters of the simulation and setting the values to appropriate values at the time of execution of automatic simulation by the information processing device 111, it is possible to improve precision of the simulation, for example, even when there is a change with time of the glass melting furnace.

In the present embodiment, for example, when glass is produced using a glass melting furnace using a float process or the like, it is possible to support an operation of a glass producing process. In general, in a raw material melting step of glass production, it is important to ascertain and manage a state of the glass melting furnace, and this support is possible with the present embodiment.

In the glass production system 1 according to the present embodiment, for example, the processes of a time-series data managing step, an actual machine data acquiring step, a calibration parameter estimating step, and a state estimation simulation step are performed.

In the present embodiment, the process of the time-series data managing step is performed by the glass production device 131 and the database 112, and the processes of the other steps are performed by the information processing device 111.

In the time-series data managing step, measurement data of a plurality of sensors which are installed inside or outside of the glass melting furnace (for example, a melting bath) to measure quantities associated with molten glass is collected, and the collected measurement data is stored as time-series data in the database. Data of another format may be used instead of the time-series data (time-series measurement data). The measurement data is, for example, a measurement result in the glass producing step using an actual machine (an actual glass production device).

In the actual machine data acquiring step, data (actual machine data) required for a subsequent process out of the time-series data stored in the time-series data managing step is acquired.

In the calibration parameter estimating step, calibration parameters of a simulation model (a simulation model modeling a melting furnace) are estimated using the calibration parameter estimation model and the actual machine data acquired in the actual machine data acquiring step.

In the state estimation simulation step, the state of the actual machine is estimated using the simulation model, the calibration parameters estimated in the calibration parameter estimating step, and the time-series data (for example, the actual machine data acquired in the actual machine data acquiring step).

In the glass production system 1 according to the present embodiment, the process of a calibration parameter estimation model constructing step may be performed.

In the calibration parameter estimation model constructing step, a calibration parameter estimation model for estimating calibration parameters of the simulation model (a simulation model modeling a melting furnace) is constructed.

In the glass production system 1 according to the present embodiment, the process of an optimization calculation step may be performed. In the optimization calculation step, optimization calculation or sensitivity analysis is performed using a simulation model or a summarization model constructed on the basis of the analysis result of the simulation model on the basis of the examined operation change guideline based on the result (the simulation result) output in the state estimation simulation step.

In the glass production system 1 according to the present embodiment, the process of a visualization step may be performed.

In the visualization step, predetermined information is visualized (for example, displayed).

The predetermined information may be, for example, one or both of data generated as a process result of the state estimation simulation step and data generated as a process result of the optimization calculation step or may be other data.

Here, various types of data may be used as data for estimation (for example, time-series data), and, for example, data of the temperatures measured by permanent thermocouples or data of an operation period of the melting furnace may be used.

For example, in the present embodiment, the calibration parameters can be estimated in the calibration parameter estimating step even when input information is only date and time information.

Various types of data may be used as the calibration parameters to be estimated, and, for example, one or both of data on the amount of furnace wall heat radiation and data on the amount of furnace material erosion (for example, a wedge brick or a throat) may be used.

An arbitrary method may be used as the estimation method, and, for example, a method using a regression model using kiln opening examination data may be used.

Various modes may be used as a simulation model (method), and, for example, a model (a method) for performing analysis in which two or more elements are coupled may be used. The model (the method) may be, for example, two-dimensional or three-dimensional and may be steady-state analysis or non-steady-state analysis.

For example, a raw material melting simulation modeling melting behavior of a raw glass material, a thermal fluid simulation of molten glass, a combustion simulation of an upper combustion space, a simulation of a potential and current distribution in the molten glass using electrical heating equipment, and steady-state analysis of a heat transfer simulation in a furnace material may be used as the elements.

For example, a model (a summarization model) summarizing the simulation model may be used instead of the original simulation model.

A reduced order model (ROM) may be used as an example of an abridged model.

As the simulation model (method), for example, 1D-CAE may be used or a circuit network model or a system model may be used.

As the simulation model (method), for example, a method using deep learning such as physics informed neural nets (PINNS) may be used.

As a simulation execution environment, various execution environments may be used, and, for example, a client PC, a workstation, a cluster machine, or a cloud service may be used.

In the glass production system 1, for example, the process of the prediction model generating step of generating a prediction model of a simulation result may be performed through an experimental design method and machine learning.

In the prediction model generating step, a plurality of simulations are performed on the basis of the experimental design method in a range comprehensively including conditions assumed in an actual glass producing step using the operation conditions of the glass melting furnace and the calibration parameters of the simulation as setting variables.

In the prediction model generating step, a machine learning model is constructed by performing machine learning using data of the simulation result, and sensitivity (change sensitivity) by which the operation conditions of the glass melting furnace and the calibration parameters of the simulation affect the simulation result of predetermined values at a plurality of observation points of the glass melting furnace is evaluated by performing machine learning using data of the simulation result. As the predetermined values, for example, the molten glass temperature, the molten glass flow rate, or both values thereof may be used.

In the prediction model generating step, for example, data of the simulation result may be stored in the database. In this case, the machine learning model is constructed by performing machine learning using data stored in the database.

In the glass production system 1 according to the present embodiment, the process of the calibration parameter determining step of calculating the calibration parameters (unknown variables) of the simulation may be performed, for example, by inputting actual machine data to a prediction model.

Here, data on an actual glass melting furnace is used. The actual glass melting furnace has, for example, the same shape as the glass melting furnace assumed in a simulation (or a shape close enough to match a simulation), and a plurality of sensors are installed to measure quantities associated with molten glass.

In the calibration parameter determining step, operation conditions at an arbitrary time point and predetermined values (at least one of the molten glass temperature and the molten glass flow rate in the present embodiment) at that time are acquired at a plurality of observation points.

In the calibration parameter determining step, the calibration parameters are optimized to most likely numerical values using a computer on the basis of a sensitivity evaluation result such that a deviation between a predetermined value acquired at the observation points and a value (a value corresponding to the predetermined value) based on the result acquired through the simulation is minimized (such that, when there are a plurality of values, the deviation is simultaneously minimized). Accordingly, the calibration parameters are determined.

In a parameter estimation method in this process, a Bayesian estimation method may be used instead of the maximum likelihood estimation method. As an estimation algorithm, a calculation method employing an approximate expression such as a polynomial expression or an exponential function formulated from prior knowledge associated with the step may be used in addition to a method using machine learning.

In the glass production system 1 according to the present embodiment, a limit range may be provided for a possible value of the calibration parameter estimation result. For example, a change in the amount of furnace material heat radiation due to the aging of the glass melting furnace formulated by experiments or from measurement data in the past may be calculated or reflected, and different limits may be provided for the numerical value range to be optimized according to the period.

For example, a minimum value, a maximum value, or both thereof may be used as the limit.

### (Second embodiment)

A second embodiment will be described.

### [Modified example: example in which estimation of calibration parameter is omitted]

Here, in the first embodiment, the process of Step S2 (the calibration parameter estimating process) illustrated in FIG. 4 is performed, but a configuration in which the process of Step S2 (the calibration parameter estimating process) is not performed may be used as a modified example. In this case, the information processing device 111 may not include a function and data of estimating a calibration parameter.

In the present modified example, the process of Step S3 is performed after the process of Step S1 in the process flow illustrated in FIG. 4.

In the present modified example, the calibration parameter estimating process is not performed, and a value corresponding to the calibration parameter is kept, for example, constant.

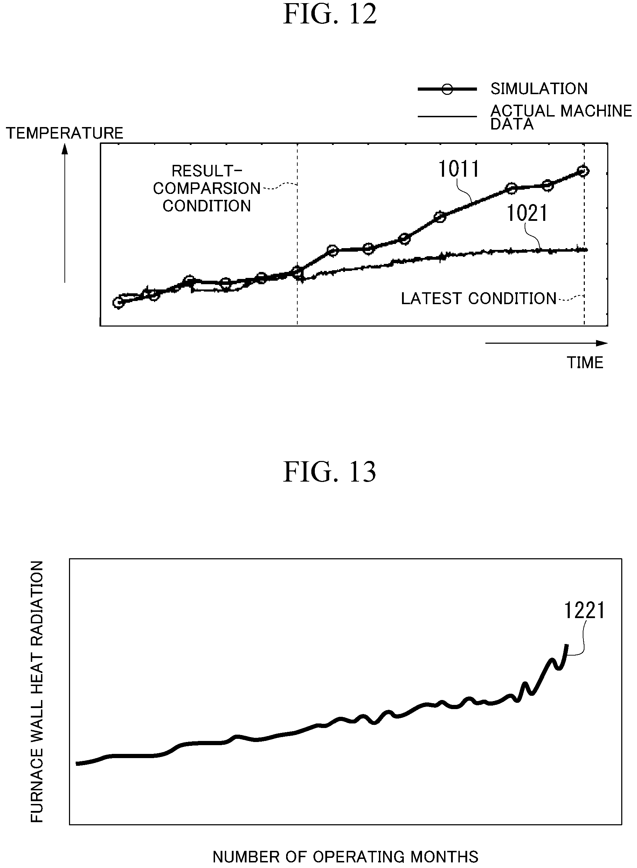

FIG. 12 is a diagram schematically illustrating an example of characteristics based on the simulation result when the calibration parameter estimating process is not performed. The example illustrated in FIG. 12 is not an actual example, but may be a schematic example.

In FIG. 12, characteristics 1011 based on the simulation result when the calibration parameter estimating process is not performed and characteristics 1021 based on actual machine data are illustrated for the temperature at one position.

In the graph illustrated in FIG. 12, the horizontal axis represents the time (an elapse of time), and the vertical axis represents the temperature. Detailed scales are omitted in the vertical axis and the horizontal axis.

When the calibration parameter estimating process is not performed as illustrated in the example of FIG. 12, a deviation from the characteristics 1021 based on the actual machine data increases in comparison with a case in which the calibration parameter estimating process is performed.

That is, for example, even when latest result conditions are input to a glass melting furnace simulation model fixed to the calibration parameters in the past, it is not possible to accurately reproduce the latest temperature or the like of the actual machine. A principal reason thereof is that an influence of the change with time of an amount of heat radiation in the kiln (an amount of heat radiation in the melting furnace) or the like is large. For example, it is considered that the surface temperature of the kiln, the sectional temperature, and the like increase due to the change with time, and accuracy of the simulation result for a flow rate or the like in addition to the temperature decreases.

When an influence of the change with time is not large (for example, in a period close to that in a condition of comparison with results illustrated in FIG. 12), a configuration in which the process of Step S2 (the calibration parameter estimating process) illustrated in FIG. 4 is not performed may be employed.

For example, as a period in which the influence of the change with time is not large, a period until several months elapses from the condition of comparison with results is conceivable, but the present disclosure is not limited thereto.

An example of the change with time associated with a glass melting furnace will be described below with reference to FIG. 13. This is merely a schematic example, and detailed description thereof will be omitted.

FIG. 13 is a diagram schematically illustrating an example of the change with time in furnace wall heat radiation of the glass melting furnace.

In the graph illustrated in FIG. 13, the horizontal axis represents the number of operation months, and the vertical axis represents the furnace wall heat radiation.

In the graph, characteristics 1221 indicating an average of characteristics of a plurality of kilns (for example, five or more kilns) including a glass melting furnace are shown.

In the example illustrated in FIG. 13, it is known that the furnace wall heat radiation increases due to the aging.

Here, by formulating the change with time, the amount of furnace wall heat radiation in an arbitrary period may be calculated and used as a calibration parameter. This calibration parameter setting method is not limited to the furnace wall heat radiation, but may be applied to others.

As described above, in the present embodiment, for example, the simulation accuracy is considered to be lower than that in the configuration in which the calibration parameter estimating process is performed as in the first embodiment. On the other hand, according to the present embodiment, it is possible to achieve an increase in support efficiency using a simulation through realization of an automatic simulation in glass production in comparison with the related art (for example, a case in which a simulation is performed by a process operator and a full-time worker for analysis).

For example, in the related art (for example, a case in which a simulation is performed by a process operator and a full-time worker for analysis), an amount of heat radiation or the like is set through comparison between results for one to two months on the basis of information of an actual kiln, then a base roughness result (a base flow result) of the glass melting furnace is estimated through execution of a simulation for about one to two weeks, and thus a considerable time is required.

On the other hand, in the present embodiment, the amount of heat radiation or the like can be set through comparison between results for a short time (for example, several tens of minutes) on the basis of information of an actual kiln, and then a base roughness result (a base flow result) of the glass melting furnace can be estimated through execution of a simulation for a short time (for example, several hours). This required time is an example for explanation, and the present disclosure is not limited to this time.

Accordingly, in the present embodiment, anyone can obtain an evaluation result of a circulation state of molten glass in a timely manner.

### (For aforementioned embodiments)

A program for realizing a function of any constituent of any device described above may be recorded on a computer-readable recording medium, and a computer system may be caused to read and execute the program. The "computer system" mentioned herein includes an operating system or hardware such as peripherals. The "computer-readable recording medium" is a portable medium such as a flexible disk, a magneto-optical disc, a ROM, or a compact disc (CD)-read only memory (ROM) or a storage device such as a hard disk incorporated into a computer system. The "computer-readable recording medium" may include a medium that holds a program for a predetermined time like a volatile memory in a computer system serving as a server or a client when a program is transmitted via a network such as the Internet or a communication circuit line such as a telephone line. The volatile memory may be, for example, a random access memory (RAM). The recording medium may be, for example, a non-transitory recording medium.

The program may be transmitted from a computer system in which the program is stored in a storage device or the like to another computer system via a transmission medium or using carrier waves in the transmission medium. Here, the "transmission medium" for transmitting a program is a medium having a function of transmitting information such as a network such as the Internet or a communication line such as a telephone line.

The program may be a program for realizing some of the aforementioned functions. The program may be a program for realizing the aforementioned functions in combination with another program stored in advance in the computer system, that is, a so-called differential file. The differential file may be called a differential program.

The function of any constituent in any device described above may be realized by a processor. For example, the processes in the embodiments may be realized by a processor operating on the basis of information such as a program and a computer-readable recording medium storing the information such as a program. Here, for example, the functions of the constituents of the processor may be realized by individual hardware, or the functions of the constituents may be realized by unified hardware. For example, the processor may include hardware, and the hardware may include at least one of a circuit for processing a digital signal and a circuit for processing an analog signal. For example, the processor may be constituted by one or both of one or more circuit devices and one or more circuit elements which are mounted on a circuit board. An integrated circuit (IC) or the like may be used as a circuit device, a resistor, a capacitor, or the like may be used as a circuit element.

Here, the processor may be, for example, a CPU. The processor is not limited to a CPU, and, for example, various processors such as a graphics processing unit (GPU) or a digital signal processor (DSP) may be used. The processor may be, for example, a hardware circuit using an application-specific integrated circuit (ASIC). For example, the processor may include a plurality of CPUs or may include a hardware circuit using a plurality of ASICs. For example, the processor may be constituted, for example, by a combination of a plurality of CPUs and a hardware circuit using a plurality of ASICs. The processor may include, for example, one or more of an amplifier circuit and a filter circuit for processing an analog signal.

While embodiments of the present disclosure have been described above in detail with reference to the drawings, any specific configurations are not limited to the embodiments and include changes in design without departing from the gist of the present disclosure.

### [Additional Remark]

(Example configuration 1) to (Example configuration 11) will be described below.

### (Example configuration 1)

An information processing device including a state estimating unit configured to estimate an actual state using measurement data stored in a measurement data storage unit storing measurement data of a plurality of sensors installed inside or outside of a glass melting furnace to measure a value associated with molten glass and a glass melting furnace simulation model modeling the glass melting furnace.

### (Example configuration 2)

The information processing device according to (Example configuration 1), further including a calibration parameter estimating unit configured to estimate a calibration parameter using a calibration parameter estimation model for estimating a calibration parameter of the glass melting furnace simulation model and the measurement data stored in the measurement data storage unit,
wherein the state estimating unit estimates the actual state using the calibration parameter estimated by the calibration parameter estimating unit.

### (Example configuration 3)

The information processing device according to (Example configuration 1) or (Example configuration 2), further including a model computing unit configured to perform a computing operation of optimization calculation or sensitivity analysis using the glass melting furnace simulation model or a summarization model based on the glass melting furnace simulation model on the basis of an operation change guideline based on the state estimation result from the state estimating unit.

### (Example configuration 4)

The information processing device according to (Example configuration 3), further including an output unit configured to output information on at least one of the state estimation result from the state estimating unit and the computing result from the model computing unit.

### (Example configuration 5)

The information processing device according to (Example configuration 2), wherein the calibration parameter estimating unit includes:
an experiment design method executing unit configured to execute a plurality of simulations on the glass melting furnace simulation model on the basis of an experimental design method in a range comprehensively including conditions assumed in an actual glass production process with an operation condition of the glass melting furnace and the calibration parameter as configuration variables;
a simulation result storage unit configured to store a simulation result from the experimental design method executing unit;
a prediction model generating unit configured to generate a prediction model by performing machine learning using the simulation result stored in the simulation result storage unit; and
a change sensitivity evaluating unit configured to evaluate a change sensitivity by which the operation condition of the glass melting furnace and the calibration parameter affect the simulation result of at least one of the molten glass temperature, the resistivity of molten glass, the current value, the voltage value, or the resistance value between heating electrodes, the molten glass flow rate, the furnace material temperature, and the furnace-inside/outside atmosphere temperature at a plurality of observation points of the glass melting furnace.

### (Example configuration 6)

The information processing device according to (Example configuration 5), wherein the calibration parameter estimating unit further includes an observation point data acquiring unit configured to acquire the operation condition at a predetermined time point and to acquire observation point data which is data of at least one of the molten glass temperature, the resistivity of molten glass, the current value, the voltage value, or the resistance value between heating electrodes, the molten glass flow rate, the furnace material temperature, and the furnace-inside/outside atmosphere temperature at the predetermined time point at the plurality of observation points of the glass melting furnace, and
wherein the calibration parameter estimating unit estimates the calibration parameter on the basis of an evaluation result from the change sensitivity evaluating unit such that a deviation between the observation point data acquired by the observation point data acquiring unit and a result acquired through the simulation decreases at each observation point.

### (Example configuration 7)

The information processing device according to (Example configuration 6), wherein the calibration parameter estimating unit limits a value range of the calibration parameter on the basis of a change in furnace material heat radiation due to aging of the glass melting furnace.

A glass production system including the aforementioned information processing device can be provided.

### (Example configuration 8)

A glass production system including a glass production device including a glass melting furnace and an information processing device, the glass production system including:
a measurement data storage unit configured to store measurement data of a plurality of sensors installed inside or outside of the glass melting furnace to measure a value associated with molten glass and provided inside or outside of the information processing device,
wherein the information processing device includes a state estimating unit configured to estimate an actual state using a glass melting furnace simulation model modeling the glass melting furnace and the measurement data stored in the measurement data storage unit.

A method that is performed by the aforementioned information processing device can be provided.

### (Example configuration 9)

An information processing method that is performed by an information processing device, the information processing method including estimating an actual state using measurement data stored in a measurement data storage unit storing measurement data of a plurality of sensors installed inside or outside of a glass melting furnace to measure a value associated with molten glass and a glass melting furnace simulation model modeling the glass melting furnace.

A program (a computer program) that is executed by a computer constituting the aforementioned information processing device can be provided.

### (Example configuration 10)

A program for causing a computer to realize a state estimating function of estimating an actual state using measurement data stored in a measurement data storage unit storing measurement data of a plurality of sensors installed inside or outside of a glass melting furnace to measure a value associated with molten glass and a glass melting furnace simulation model modeling the glass melting furnace.

A calibration parameter estimation method that is applicable to the aforementioned information processing device or the like can be provided.

### (Example configuration 11)

A calibration parameter estimation method including:
executing a plurality of simulations on a glass melting furnace simulation model on the basis of an experimental design method in a range comprehensively including conditions assumed in an actual glass production process with an operation condition of a glass melting furnace and a calibration parameter as configuration variables;
generating a prediction model by performing machine learning using a simulation result of the simulation; and
evaluating a change sensitivity by which the operation condition of the glass melting furnace and the calibration parameter affect the simulation result of at least one of the molten glass temperature, the resistivity of molten glass, the current value, the voltage value, or the resistance value between heating electrodes, the molten glass flow rate, the furnace material temperature, and the furnace-inside/outside atmosphere temperature at a plurality of observation points of the glass melting furnace.

### REFERENCE SIGNS LIST

1 Glass production system
20 Top structure
40 Thermocouple
50 Power supply electrode
60 Burner
70 Glass material (raw glass material or molten glass)
100 Glass melting kiln
111 Information processing device
112 Database
131 Glass production device
211 Input unit
212 Output unit
213 Communication unit
214 Storage unit
215 Control unit
231 Operation unit
251 Display unit
271 State estimating unit
272 Calibration parameter estimating unit
273 Model computing unit
274 Experimental design method executing unit
275 Prediction model generating unit
276 Change sensitivity evaluating unit
277 Observation point data acquiring unit
311 Glass melting furnace
331, 351 Sensor unit
3011, 3211 Table
1011, 1021, 1221, 3111, 3511, 3521 Characteristics
A1 Actual production process
A2 Simulation process
A3 Integrated data base
B1 Actual machine
B2 Actual machine data
C1 Simulation model
D1 Parameter estimation
E1, E2 User
F1, F2 Computer
G1 Server
H1 to H3 Heat source
I1 to I3 Temperature
J1 to J2 Calibration parameter
M1 Glass melting furnace model
R1 Measurement data
R11 Glass melting furnace simulation model
R12 Calibration parameter estimation model
R13 Prediction model
R14 Simulation result
U1 Universal set of conditions
V1 Condition
W1 Simulation result group
w1 to w3, w11 to w13 Sensitivity

## Claims

1. An information processing device comprising
a state estimating unit configured to estimate an actual state using measurement data stored in a measurement data storage unit storing measurement data of a plurality of sensors installed inside or outside of a glass melting furnace to measure a value associated with molten glass and a glass melting furnace simulation model modeling the glass melting furnace.

2. The information processing device according to claim 1, further comprising
a calibration parameter estimating unit configured to estimate a calibration parameter using a calibration parameter estimation model for estimating a calibration parameter of the glass melting furnace simulation model and the measurement data stored in the measurement data storage unit,
wherein the state estimating unit estimates the actual state using the calibration parameter estimated by the calibration parameter estimating unit.

3. The information processing device according to claim 1 or 2, further comprising
a model computing unit configured to perform a computing operation of optimization calculation or sensitivity analysis using the glass melting furnace simulation model or a summarization model based on the glass melting furnace simulation model on the basis of an operation change guideline based on the state estimation result from the state estimating unit.

4. The information processing device according to claim 3, further comprising
an output unit configured to output information on at least one of the state estimation result from the state estimating unit and the computing result from the model computing unit.

5. The information processing device according to claim 2, wherein the calibration parameter estimating unit includes:
an experiment design method executing unit configured to execute a plurality of simulations on the glass melting furnace simulation model on the basis of an experimental design method in a range comprehensively including conditions assumed in an actual glass production process with an operation condition of the glass melting furnace and the calibration parameter as configuration variables;
a simulation result storage unit configured to store a simulation result from the experimental design method executing unit;
a prediction model generating unit configured to generate a prediction model by performing machine learning using the simulation result stored in the simulation result storage unit; and
a change sensitivity evaluating unit configured to evaluate a change sensitivity by which the operation condition of the glass melting furnace and the calibration parameter affect the simulation result of at least one of a molten glass temperature, a resistivity of molten glass, a current value, a voltage value, or a resistance value between heating electrodes, a molten glass flow rate, a furnace material temperature, and a furnace-inside/outside atmosphere temperature at a plurality of observation points of the glass melting furnace.

6. The information processing device according to claim 5, wherein the calibration parameter estimating unit further includes an observation point data acquiring unit configured to acquire the operation condition at a predetermined time point and to acquire observation point data which is data of at least one of the molten glass temperature, the resistivity of molten glass, the current value, the voltage value, or the resistance value between heating electrodes, the molten glass flow rate, the furnace material temperature, and the furnace-inside/outside atmosphere temperatures at the predetermined time point at the plurality of observation points of the glass melting furnace, and
wherein the calibration parameter estimating unit estimates the calibration parameter on the basis of an evaluation result from the change sensitivity evaluating unit such that a deviation between the observation point data acquired by the observation point data acquiring unit and a result acquired through the simulation decreases at each observation point.

7. The information processing device according to claim 6, wherein the calibration parameter estimating unit limits a value range of the calibration parameter on the basis of a change in furnace material heat radiation due to aging of the glass melting furnace.

8. A glass production system comprising a glass production device including a glass melting furnace and an information processing device, the glass production system comprising:
a measurement data storage unit configured to store measurement data of a plurality of sensors installed inside or outside of the glass melting furnace to measure a value associated with molten glass and provided inside or outside of the information processing device,
wherein the information processing device includes a state estimating unit configured to estimate an actual state using a glass melting furnace simulation model modeling the glass melting furnace and the measurement data stored in the measurement data storage unit.

9. An information processing method that is performed by an information processing device, the information processing method comprising estimating an actual state using measurement data stored in a measurement data storage unit storing measurement data of a plurality of sensors installed inside or outside of a glass melting furnace to measure a value associated with molten glass and a glass melting furnace simulation model modeling the glass melting furnace.

10. A program for causing a computer to realize a state estimating function of estimating an actual state using measurement data stored in a measurement data storage unit storing measurement data of a plurality of sensors installed inside or outside of a glass melting furnace to measure a value associated with molten glass and a glass melting furnace simulation model modeling the glass melting furnace.

11. A calibration parameter estimation method comprising:
executing a plurality of simulations on a glass melting furnace simulation model on the basis of an experimental design method in a range comprehensively including conditions assumed in an actual glass production process with an operation condition of a glass melting furnace and a calibration parameter as configuration variables;
generating a prediction model by performing machine learning using a simulation result of the simulation; and
evaluating a change sensitivity by which the operation condition of the glass melting furnace and the calibration parameter affect the simulation result of at least one of a molten glass temperature, a resistivity of molten glass, a current value, a voltage value, or a resistance value between heating electrodes, a molten glass flow rate, a furnace material temperature, and a furnace-inside/outside atmosphere temperature at a plurality of observation points of the glass melting furnace.
